# EUROPEAN PATENT APPLICATION

(11) **EP 3 296 854 A1**
(43) Date of publication of application: **21.03.2018**
(21) Application number: 17191193.6
(22) Date of filing: 14.09.2017
(51) Int. Cl.: G06F 3/0488, G06F 3/041, B66B 1/46, H01H 13/70

(54) **COMMON PLATFORM USER TOUCH INTERFACE**

(30) Priority: 14.09.2016 US 201615264779
(71) Applicant: Otis Elevator Company, Farmington, Connecticut 06032 (US)
(72) Inventor: WITCZAK, Tadeusz Pawel, Farmington, CT 06032 (US); PIECH, Marcin, East Hartford, CT 06108 (US); OGGIANU, Stella M., Farmington, CT 06032 (US); PIECH, Zbigniew, Farmington, CT 06032 (US)
(74) Representative: Ramsay, Laura Anne

(57) **Abstract**

Common platform user interface touch systems (400) including a first housing component (402) having at least one input element (406), a second housing component (404) to define an enclosure with the first housing component (402), a pressure sensing element (412) disposed within the enclosure and configured to receive user input from the at least one input element (406), and an interface controller (418) operably connected to the pressure sensing element (412) and configured to receive inputs from the pressure sensing element (412) to detect user input at the at least one input element (406).

## Description

### BACKGROUND

The subject matter disclosed herein generally relates to control or interface systems and, more particularly, to common control or platform user touch interface systems.

User interface components, such as kiosks, elevator car operating panels, and call buttons, are typically offered as standardized products. The designs of such user interface components are limited to a small product family while balancing product portfolio with manufacturing and maintenance costs. It may be advantageous to provide improved options for user interfaces to enable improved user experience.

### SUMMARY

According to one embodiment, a common platform user interface touch system is provided. The system includes a first housing component having at least one input element, a second housing component to define an enclosure with the first housing component, a pressure sensing element disposed within the enclosure and configured to receive user input from the at least one input element, and an interface controller operably connected to the pressure sensing element and configured to receive inputs from the pressure sensing element to detect user input at the at least one input element.

In addition to one or more of the features described above, or as an alternative, further embodiments of the system may include that the pressure sensing element is flexible.

In addition to one or more of the features described above, or as an alternative, further embodiments of the system may include a backlight element disposed within the enclosure and conforms to the shape or geometry of the enclosure, wherein the backlight element is configured to at least illuminate the at least one input element when user input is detected on the pressure sensing element.

In addition to one or more of the features described above, or as an alternative, further embodiments of the system may include that the backlight element is an addressable or non-addressable RGB color backlight element.

In addition to one or more of the features described above, or as an alternative, further embodiments of the system may include the backlight element is flexible.

In addition to one or more of the features described above, or as an alternative, further embodiments of the system may include a pressure concentrator element disposed within the enclosure and configured to increase a pressure applied by user input at the at least one input element as detected by the pressure sensing element.

In addition to one or more of the features described above, or as an alternative, further embodiments of the system may include that the pressure concentrator element is positioned between the pressure sensing element and the first housing component.

In addition to one or more of the features described above, or as an alternative, further embodiments of the system may include that at least one of the first housing component and the second housing component includes a window.

In addition to one or more of the features described above, or as an alternative, further embodiments of the system may include that the interface controller is configured to control a display in the window.

In addition to one or more of the features described above, or as an alternative, further embodiments of the system may include that at least the first housing component is exchangeable between a plurality of different first housing components, wherein each of the plurality of different first housing components includes a different arrangement of input elements.

In addition to one or more of the features described above, or as an alternative, further embodiments of the system may include that the interface controller is programmable to match the specific arrangement of input elements of a selected first housing component.

In addition to one or more of the features described above, or as an alternative, further embodiments of the system may include that the first housing component and input elements define an elevator car operating panel.

In addition to one or more of the features described above, or as an alternative, further embodiments of the system may include that the first housing component and input elements define an elevator hall call panel.

In addition to one or more of the features described above, or as an alternative, further embodiments of the system may include that the common platform user interface touch system is a component of an elevator system.

In addition to one or more of the features described above, or as an alternative, further embodiments of the system may include a haptic element disposed within the enclosure and configured to provide physical feedback to a user interacting with the at least one input element.

In addition to one or more of the features described above, or as an alternative, further embodiments of the system may include that the haptic element is at least one of wound springs, gels, polymeric foam, or vibration generator.

In addition to one or more of the features described above, or as an alternative, further embodiments of the system may include that the first housing component and the second housing component are integrally formed.

In addition to one or more of the features described above, or as an alternative, further embodiments of the system may include that the first and second housing components are removably connectable.

In addition to one or more of the features described above, or as an alternative, further embodiments of the system may include that the interface controller is configured to detect at least one of (i) an amount of force applied to the pressure sensing element, (ii) a duration or length of time of application of force applied to the pressure sensing element, (iii) multiple separate or distinct locations of input at the pressure sensing element, (iv) different size areas of force applied to the pressure sensing element, or (v) a type of input device applied to the input element.

Accordingly to another embodiment, a method of forming a common platform user interface touch system is provided. The method includes assembling a first housing component and a second housing component, the first housing component having at least one input element, installing a pressure sensing element within the enclosure and configured to receive user input from the at least one input element, and operably connecting an interface controller to the pressure sensing element and configured to receive inputs from the pressure sensing element to detect user input at the at least one input element.

Technical effects of embodiments of the present disclosure include common platform user interface touch systems with interchangeability, customizability, and programmability for various desired functions, aesthetics, and/or to fit within a particular structure.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a schematic illustration of an elevator system that may employ various embodiments of the present disclosure;
FIG. 2 is a schematic illustration of a landing floor of an elevator system with a hall call panel that may employ various embodiments of the present disclosure;
FIG. 3 is a schematic illustration of a car wall panel of an elevator system with a car operating panel that may employ various embodiments of the present disclosure;
FIG. 4A is an exploded schematic illustration of a common platform user interface touch system in accordance with an embodiment of the present disclosure;
FIG. 4B is an enlarged illustration of a portion of the common platform user interface touch system of FIG. 4A;
FIG. 5 is a schematic illustration of different configurations of common platform user interface touch systems in accordance with the present disclosure;
FIG. 6 is another schematic illustration of different configurations of common platform user interface touch systems in accordance with the present disclosure.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

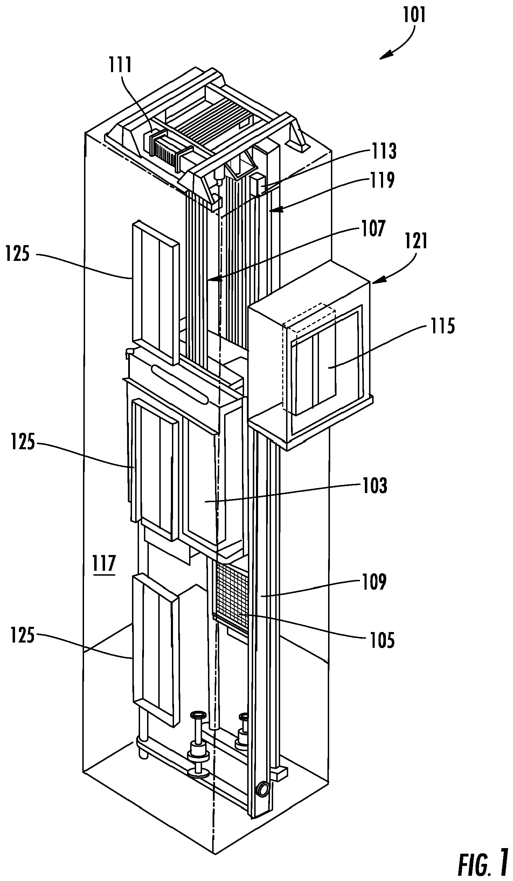

FIG. 1 is a perspective view of an elevator system 101 including an elevator car 103, a counterweight 105, a roping 107, a guide rail 109, a machine 111, a position encoder 113, and an elevator controller 115. The elevator car 103 and counterweight 105 are connected to each other by the roping 107. The roping 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The roping 107 engages the machine 111, which is part of an overhead structure of the elevator system 101. The machine 111 is configured to control movement between the elevator car 103 and the counterweight 105. The position encoder 113 may be mounted on an upper sheave of a speed-governor system 119 and may be configured to provide position signals related to a position of the elevator car 103 within the elevator shaft 117. In other embodiments, the position encoder 113 may be directly mounted to a moving component of the machine 111, or may be located in other positions and/or configurations as known in the art.

The elevator controller 115 is located, as shown, in a controller room 121 of the elevator shaft 117 and is configured to control the operation of the elevator system 101, and particularly the elevator car 103. For example, the elevator controller 115 may provide drive signals to the machine 111 to control the acceleration, deceleration, leveling, stopping, etc. of the elevator car 103. The elevator controller 115 may also be configured to receive position signals from the position encoder 113. When moving up or down within the elevator shaft 117 along guide rail 109, the elevator car 103 may stop at one or more landings 125 as controlled by the elevator controller 115. Although shown in a controller room 121, those of skill in the art will appreciate that the elevator controller 115 can be located and/or configured in other locations or positions within the elevator system 101.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. Although shown and described with a roping system, elevator systems that employ other methods and mechanisms of moving an elevator car within an elevator shaft may employ embodiments of the present disclosure. FIG. 1 is merely a non-limiting example presented for illustrative and explanatory purposes. It should be understood that the common platform user interface touch system may be used in any type of system where interaction or input is desired from a user.

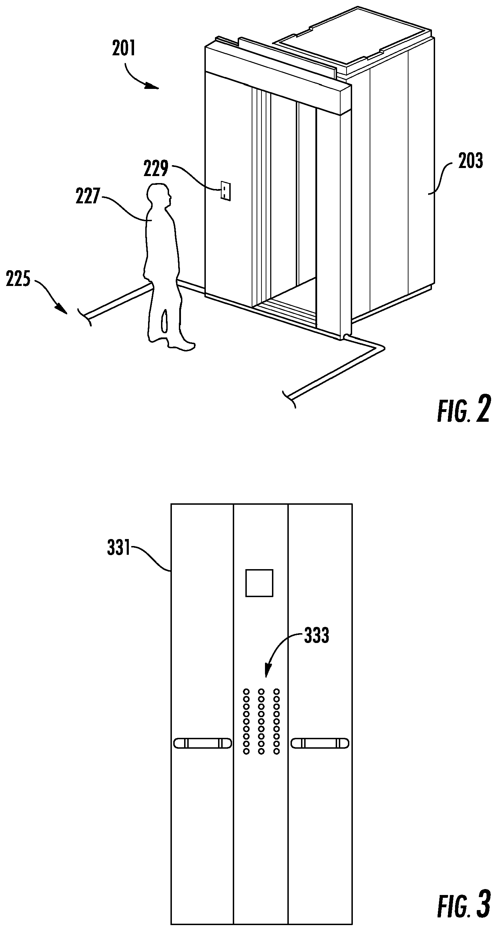

FIG. 2 is a schematic illustration of an elevator system 201 that may incorporate embodiments disclosed herein. As shown in FIG. 2, an elevator car 203 is located at a landing 225. The elevator car 203 may be called to the landing 225 by a passenger 227 that desires to travel to another floor within a building. The passenger 227 can call the elevator car 203 by pressing a call button on a hall call panel 229. The hall call panel 229 is in operable communication with an elevator controller (e.g., elevator controller 115 of FIG. 1) and can make a request such that an elevator car will stop at the landing 225. The hall call panel 229 can be used to request travel in a desired direction (e.g., up or down), as known in the art. When the elevator car 203 reaches the landing 225, one or more elevator doors, including elevator car doors and landing doors, may open, allowing the passenger 227 to enter or exit the elevator car 203.

FIG. 3 is a schematic illustration of an elevator car wall 331 that includes a car operating panel 333. The car operating panel 333, in traditional elevator system configurations, is a fixed operating panel that enables passengers to select floors to travel to within a building and/or provide other operation (e.g., maintenance operations, emergency operations, etc.). That is, the car operation panel 333 may include physical or mechanical buttons that are preset and fit without a particular physical layout. However, in accordance with embodiments of the present disclosure, the car operating panel 333 may include customizable features and/or be one of a type of uniform platform touch interface as described herein.

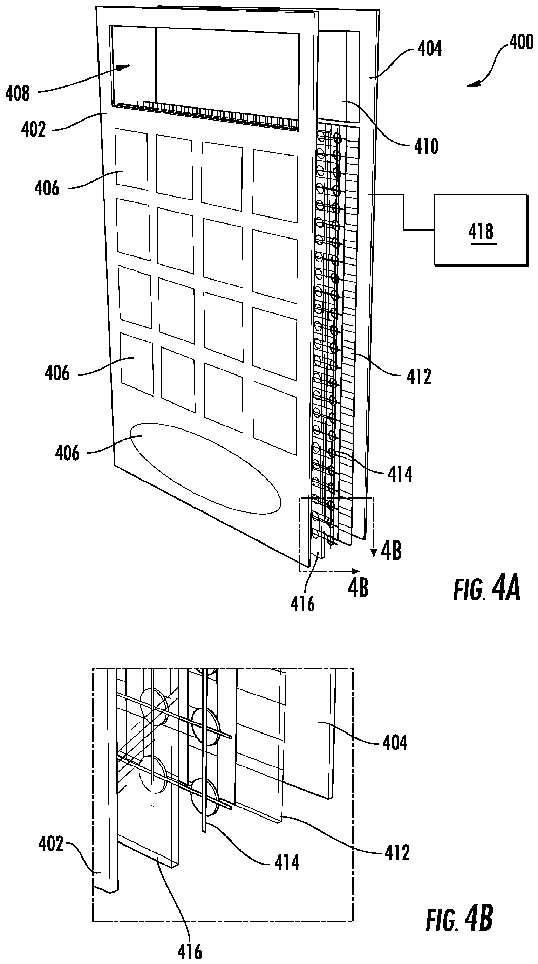

Turning now to FIGS. 4A-4B, schematic illustrations of a common platform user interface touch system 400 in accordance with a non-limiting embodiment of the present disclosure are shown. FIG. 4A is an exploded schematic illustration of the common platform user interface touch system 400 and FIG. 4B is an enlarged illustration of a portion of the layers of the common platform user interface touch system 400.

The common platform user interface touch system 400 as illustrated is a control panel for an elevator system, such as a car operating panel. However, embodiments and features of the present disclosure can be employed in various other types of control and/or interface systems. For example, embodiments of the present disclosure can be applied to control panels for building systems, user interfaces, input and/or control fixtures (e.g., kiosks, lighting, air conditioning/control, thermostats, sound systems, etc.), or other types of input devices.

As shown in FIGS. 4A-4B, the common platform user interface touch system 400 includes a first housing component 402 and a second housing component 404. The first and second housing components 402, 404 can form an enclosure of the common platform user interface touch system 400. For example, as shown, the enclosure can house or otherwise contain multiple layers that are configured to provide touch and input functionality for the common platform user interface touch system 400.

The first and second housing components 402, 404 can be molded or otherwise formed and structured to any desired geometric shape, as described herein. Further, in some embodiments, the first and second housing components 402, 404 can be integrally formed as a single part or single body. For example, the housing components 402, 404 can define various contours, curves, bends, etc. and house the interior layers and provide desired functionality. Further, as shown, the first housing component 402 can include multiple input elements, such as buttons, as well as configurable input locations/surface areas 406, and an optional window 408. Accordingly, the first housing component 402 can be a face plate of the common platform user interface touch system 400. The second housing component 404 can, in some embodiments and as shown in FIG. 4A, include a display 410. The display 410 can be mounted to or part of the second housing component 404 and can be an LED or other lighted display or screen that can provide information to a user of the common platform user interface touch system 400. In some embodiments, the display 410 can be a separate structure from the second housing component 404 and can be retained between the first and second housing components 402, 404.

The functionality of the common platform user interface touch system 400 is provided by the interior layers, which include, as shown, a pressure sensing element 412, an optional pressure concentrator element 414, and an optional backlight element 416 (collectively "interior elements"). In some embodiments, the interior elements 412, 414, 416 can be rigid or flexible and sized to fit within the enclosure formed from the first and second housing components 402, 404 or between any other replaceable and/or exchangeable enclosure or housing structures. The interior elements 412, 414, 416 are configured to enable an interchangeable and common platform that can be selectively programmed to provide a desired functionality. In an embodiment wherein the first and second housing components 402, 404 are integrally formed, the interior elements can be slid or otherwise inserted into or through a slot or other opening or access area of the integrally formed housing components.

That is, embodiments of the present disclosure provide a platform user interface technology utilizing a set of distinct and inter-changeable layers affording size, shape, and functional product customization. That is, different shapes, geometries, and/or orientations can be enabled through enclosure selection, with the interior elements being interchangeable or universally applicable regardless of enclosure configuration (e.g., as shown and described below). For example, because of the nature of the input elements (e.g., flexible) and the inter-changeability of the layers, multiple different enclosure shapes, sizes, etc. can be constructed or otherwise designed, and the same (or similar) interior layers can be inserted into each. That is, the interior layers can be universal to a variety of different enclosures. Thus, in one non-limiting example, a first common platform user interface touch system that is to be installed on a column (e.g., curved surface) can have the enclosure molded to an appropriate contour and a second common platform user interface touch system can be intended to be installed on an elevator landing door frame (e.g., a flat/planar wall or surface). In this example, different interior elements are not required for the first and second common platform user interface touch systems, but rather the universal interior elements described here can be installed into either the first or the second common platform user interface touch system without further modification with respect to mechanical and/or electrical aspects of the common platform user interface touch systems.

The common platform user interface touch system 400 can be controlled and/or communicate with an interface controller 418. That is the interface controller 418 can be configured to receive signals from various parts of the common platform user interface touch system 400. As shown, the interface controller 418 is separate from the enclosure of the common platform user interface touch system 400. However, in some embodiments, the interface controller 418 can be integrated or fit within the enclosure of the common platform user interface touch system 400. The interface controller 418 can be a processor, microcontroller, or other control component and can further include memory, input/output functionality, wired or wireless communication functionality, etc. One or more of the interior layers (and/or aspects of the enclosure, e.g., display 410) are operably connected to and/or in communication with the interface controller 418. The interface controller 418 can control aspects of the common platform user interface touch system 400 and/or receive inputs and/or signals therefrom and further can be operably connected to or in communication with other devices, such as an elevator controller, HVAC components, a computer (e.g., at a kiosk), etc. depending on the use and configuration of the common platform user interface touch system 400.

As shown and described above, the inter-changeable layers include the pressure sensing element 412, the optional pressure concentrator element 414, and the optional backlight element 416. In addition to the described and shown interior layers, the common platform user interface touch system 400 can include various other interior layers without departing from the scope of the present disclosure. For example, in some embodiments, an optional haptic element can be provided within the enclosure, which can be rigid or flexible. Such haptic element can provide physical feedback via wound springs, gels, polymeric foam, vibration generator, etc. to a user. Other interior layers can include various electronic and/or mechanical functions, including, but not limited to,

The pressure sensing element 412 is a pressure mat that electromechanically detects pressure as an input and generates an output therefrom. Although shown and described as a single pressure sensing element 412, in some embodiments, multiple separate pressure sensing elements can be housed within a single enclosure. In such configurations, the multiple pressure sensing elements can be stacked on top of each other, arranged side-by-side, and/or arranged in various locations within the enclosure. Thus the pressure sensing element 412 is not to be limited to a single sheet, layer, or component.

The pressure sensing element 412 and interface controller 418 are thus customizable and/or programmable such that various pressure configurations can be defined for the pressure sensing element 412 and detected by the interface controller 418. The interface controller 418 can be programmed to detect various inputs of the pressure sensing element 412. The interface controller 418 can be preprogrammed at the time of manufacture, at the time of installation, at any time after installation (e.g., if the first housing component is replaced with a different first housing component), and/or another computer or other device can be used to program the interface controller 418. For example, the interface controller 418 and the pressure sensing element 412 can be pre-programmed to provide one or more particular functions, such as operate as a car operating panel of an elevator. The interface controller 418 and the pressure sensing element 412 can be mapped such that different regions of the pressure sensing element 412 are associated with different functions. That is, the interface controller 418 can be programmed to detect different inputs as received at different locations on the pressure sensing element 412. Accordingly, in some embodiments, the interface controller 418 can include a plurality of or continuous sensing element(s) at a periphery of the pressure sensing element 412 and receive inputs that can be used to triangulate or otherwise precisely detect a position of a pressure input at any location on the pressure sensing element 412. Further, the pressure sensing element 412 can be configured to fit beneath the first housing component 402. In such a configuration, the input elements 406 can be used for the mapping and defining of pressure regions of the pressure sensing element 412.

In the example of an elevator car operating panel, different regions of the pressure sensing element 412 can be mapped to inputs for different floors within a building that are serviced by the associated elevator. In such an example, a first pressure region can be associated with a first floor, a second pressure region can be associated with a second floor, etc. When the pressure sensing element 412 is installed within the enclosure of the common platform user interface touch system 400, a user can press in on an input element 406 of the first housing component, and the pressure will be sensed or detected by the pressure sensing element 412. Because of the mapping of the pressure sensing element 412, an associated interface controller or other electronics or processing unit can be used to output a signal related to the detected input. For example, when a user presses on an input element 406 that represents a desired floor within a building, the common platform user interface touch system 400 can register the input and send instructions to an elevator controller to travel to the desired floor (i.e., operate as a car operating panel), e.g., through the interface controller 418.

In some embodiments, the backlight element 416 can be mapped to one or more of the input elements 406, the pressure sensing element 412, and/or other aspect or part of the common platform user interface touch system 400. Accordingly, in some embodiments, the backlight element 414 can be mapped similar to the pressure sensing element 412. As such, the backlight element 414 can provide visual feedback to a user when an input element 406 is selected. In some embodiments, the backlight element 414 can include addressable or non-addressable RGB color customization. In some embodiments, the backlight element 414 can be formed from multiple light panels, sheets, and/or individual lights (e.g., LEDs) to achieve a desired backlighting functionality (e.g., color, location, brightness, etc.), and thus the backlight element 414 is not to be limited to a single sheet, layer, or component. The backlight element 414 can be used to backlight or otherwise illuminate the input elements 406, the window 408, and/or the display 410. Further, the backlight element 414 can be configured to be responsive when one or more of the other interior elements is operated. For example, if a user touches the common platform user interface touch system 400 at a particular input element 406, the pressure sensing element 412 can detect an input and perform a function. In such an instance, in some embodiments, the backlight element 414 can light up or otherwise illuminate the location that was touched or activated by the user. As such, visible feedback or information can be provided to a user of the common platform user interface touch system 400. In some embodiments, the backlight element 416 can be controlled by the interface controller 418 and in other embodiments may be directly tied to a pressure detection by the pressure sensing element 412.

The pressure concentrator element 414 can be an intermediate layer that is positioned between the input elements 406 and the pressure sensing element 412. The pressure concentrator element 414 can be configured to increase or otherwise concentrate a pressure that is input at an input element 406. That is, the pressure concentrator element 414 can be specifically configured to enable user input and can mitigate risks associated with stiff front panels and/or input element 406 (e.g., input elements that may be harder for a user to press). In some embodiments, the pressure concentrator can be integrally formed with and/or part of one of the other interior elements, such as the pressure sensing element 412 or the backlight element 416. Further, in some embodiments, multiple sheets, layers, etc. of pressure concentrators can be used, and the pressure concentrator element 412 is not to be limited to a single sheet, layer, or component.

The enclosure formed by the first and second housing components can be manufactured in standard sizes that may be modified via custom designs and materials and is configured to package and contain the interior elements 412, 414, 416 and define the shape and aesthetic look of the common platform user interface touch system 400. That is, the enclosure and the interior elements can be shaped and formed to any desired form factor depending on a desired configuration or fit within a system or other structure.

In some embodiments, various of the interior elements can include, for example, multiple individual sheets without departing from the scope of the present disclosure. For example, in one non-limiting example, multiple separate pressure elements can be housed side-by-side, overlapping, and/or stacked. Further, in some configurations, a single sheet or interior element and/or a portion of the enclosure can be configured with the functionality of one or more of the interior elements. For example, the pressure concentrator can be part of the first housing component or part of the backlight element.

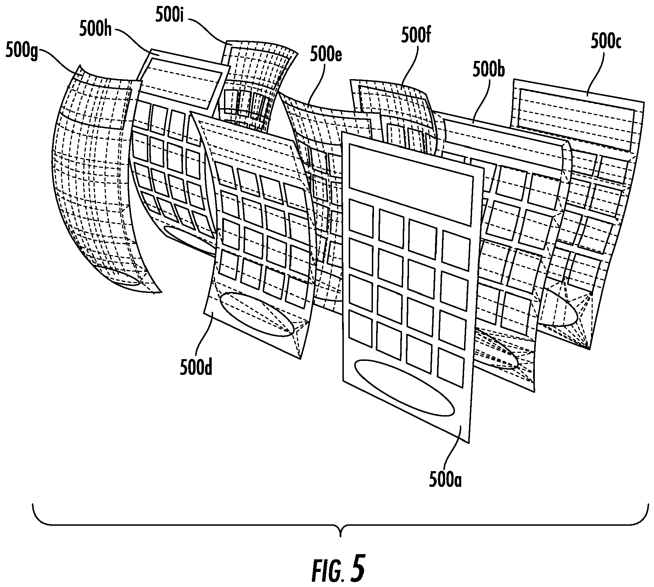

For example, as shown in FIG. 5, various shapes of common platform user interface touch systems in accordance with embodiments of the present disclosure are shown. As illustrated common platform user interface touch system 500a is a flat form factor whereas common platform user interface touch systems 500b-500i represent various example shapes and contours that can be employed in accordance with embodiments of the present disclosure. To achieve such shapes and provide the above described functionality, the enclosure (i.e., first and second housing components) is rigid and the interior elements are optionally flexible and can conform to the shape of the enclosure.

Advantageously, because the various interior elements can be flexible and can conform to the shape of the enclosure, this also enables replaceablility or exchangeability of the interior layers. As noted, the common platform user interface touch systems in accordance with the present disclosure are universal. As used herein, this means that the interior elements are interchangeable and/or replaceable and can be formed to any desired enclosure shape. Further, the enclosures themselves are also replaceable and/or interchangeable. Thus any variety or desired configuration, whether related to the enclosure (e.g., aesthetics) and/or the interior layers (e.g., functionality), can be customized based on desired characteristics. Replaceable enclosures facilitate for in-situ system customization and modernization.

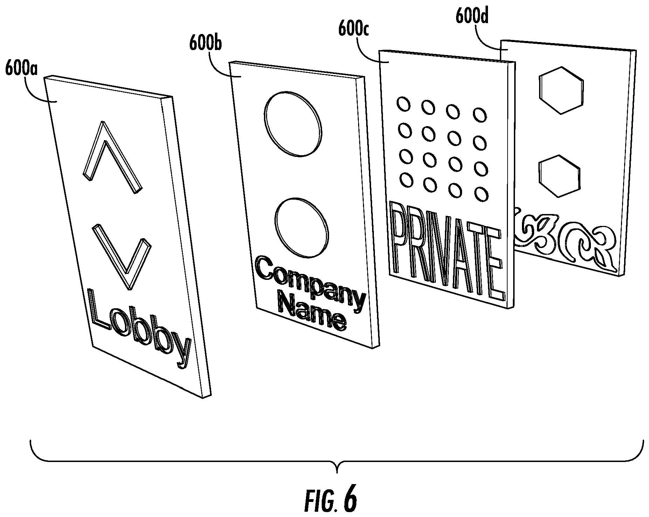

Turning now to FIG. 6, various example common platform user interface touch systems in accordance with the present disclosure are shown. In contrast to FIG. 5, which illustrated the form factor or flexibility of the enclosure, FIG. 6 illustrates the customizability of the enclosure and/or functionality of the common platform user interface touch systems. As shown in FIG. 6, common platform user interface touch systems 600a-600d illustrate different faceplate or first housing component configurations. For example common platform user interface touch systems 600a, 600b, 600d illustrate two large or main input elements or buttons (e.g., call buttons for elevator hallway call panels) and common platform user interface touch system 600c illustrates a plurality of smaller input elements or buttons (e.g., a car operating panel within an elevator car; or a phone call panel for an apartment building with multiple units).

Additional functionality can be provided at other areas of the common platform user interface touch systems. For example, on the common platform user interface touch system 600a the word "Lobby" can be an input element(s) that is mapped on or in a pressure sensing element within the enclosure and can be a special "lobby" or down peak button. The common platform user interface touch system 600b can include custom destinations in additional to regular "up" and "down" buttons. For example, as shown, a company name can be displayed and appropriately mapped on a pressure sensing element to enable a user, for example, to call an elevator with a desire destination of the listed company. In the common platform user interface touch system 600c secure multi-touch gesture entry panel is shown. That is, the various input elements can be used for multi-touch gesture entry (e.g., password/passcode entry). In the common platform user interface touch system 600d, a custom finish is illustrated, while functionality as described herein is maintained.

In other configurations additional functionality can be provided on a display and/or through an included window of the enclosure. In such configurations the display or window can be used to display certain information (e.g., notification or status information related to the common platform user interface touch system) and the rest of the enclosure can be configured to allow for user input. However, as will be appreciated by those of skill in the art, whether the enclosure includes a window or display, the interior elements are universal, as described above, and thus no alterations to interior elements need be made when implementing a configuration having a window or display. In some embodiments, no internal elements may be required for a display (e.g., a configuration that does not include a display), whether the enclosure includes a window or not. Accordingly, electronics, control elements, and/or wiring associated with a display may be omitted in such embodiments.

Advantageously, embodiments provided herein can be used for common platform user interface touch systems wherein different physical shapes or configurations and/or functionality can be achieved from a single base structure (e.g., flexible interior elements as described above). Advantageously, embodiments provided herein can provide increased reliability, including, but not limited to having more pressure sensors to provide redundant sensing zones. Additionally, the mapping of the pressure sensing elements described herein can enable multi-touch gesture detection, e.g., touching point A and point B on the common platform user interface touch system can result in a different action than touching point A and point C (wherein points B and C are different locations or input elements).

Further, advantageously, embodiments provided herein enable a thin form factor design that can reduce weight, material cost, and facilitate various installation options as compared to prior input interface devices.

Moreover, in some embodiments, the interface controller and the pressure sensing element can be additionally programmed to not only sense a location of a pressure input, but can be programmed to detect an amount of force applied, a duration or length of time of application of force, multiple separate or distinct locations of input, different size areas of force application, and/or type of input device (e.g., a finger as compared to a stylus as compared to an elbow), etc. For example, the common platform user interface touch systems of the present disclosure can be adaptive to user feedback by quantifying user input (e.g. strong quick press with slide suggests person in a hurry, etc.). Alternatively, if a larger area is detected, such as applied by an elbow, the common platform user interface touch systems of the present disclosure can be adaptive to adjust to receive an appropriate input (e.g., using elbow to press a specific input element but actually apply force over a larger area).

Furthermore, as shown and described above, embodiments provided herein enable "fully" customizable common platform user interface touch systems for fixtures and/or enclosures that can be customized to fulfill a desired solution or fit, e.g., for 'unique' solutions or structures.

Furthermore, as will be appreciated by those of skill in the art, in view of the above, fabrication methodology for the common platform user interface touch systems can provide additional benefits. For example, fabrication and assembly can be relatively simple with uniform or universal interchangeability of the interior elements. For example, various layers or sheets of the interior elements can be fabricated on a large scale, and then parts or portions of a large sheet can be removed to fit into a desired enclosure. Or, in another example, multiple interior elements of the same functionality formed from relatively smaller sheets can be connected to form larger versions of the same thing. That is, embodiments provided herein enable not only customizability in shape, contour, aesthetic look, finish, and functionality, but also in scalability. Accordingly, embodiments provided herein can enable lower costs compared with touch-screens, customized frames, etc. that may be used for user interface systems.

The use of the terms "a," "an," "the," and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the spirit and scope of the present disclosure. Additionally, while various embodiments of the present disclosure have been described, it is to be understood that aspects of the present disclosure may include only some of the described embodiments.

Accordingly, the present disclosure is not to be seen as limited by the foregoing description, but is only limited by the scope of the appended claims.

## Claims

1. A common platform user interface touch system comprising:
a first housing component having at least one input element;
a second housing component to define an enclosure with the first housing component;
a pressure sensing element disposed within the enclosure and configured to receive user input from the at least one input element; and
an interface controller operably connected to the pressure sensing element and configured to receive inputs from the pressure sensing element to detect user input at the at least one input element.

2. The common platform user interface touch system of claim 1, wherein the pressure sensing element is flexible.

3. The common platform user interface touch system of any preceding claim, further comprising a backlight element disposed within the enclosure and conforms to the shape or geometry of the enclosure, wherein the backlight element is configured to at least illuminate the at least one input element when user input is detected on the pressure sensing element, preferably wherein the backlight element is an addressable or non-addressable RGB color backlight element, preferably, wherein the backlight element is flexible.

4. The common platform user interface touch system of any preceding claim, further comprising a pressure concentrator element disposed within the enclosure and configured to increase a pressure applied by user input at the at least one input element as detected by the pressure sensing element, preferably, wherein the pressure concentrator element is positioned between the pressure sensing element and the first housing component.

5. The common platform user interface touch system of any preceding claim, wherein at least one of the first housing component and the second housing component includes a window, preferably, wherein the interface controller is configured to control a display in the window.

6. The common platform user interface touch system of any preceding claim, wherein at least the first housing component is exchangeable between a plurality of different first housing components, wherein each of the plurality of different first housing components includes a different arrangement of input elements, preferably, wherein the interface controller is programmable to match the specific arrangement of input elements of a selected first housing component.

7. The common platform user interface touch system of any preceding claim, wherein the first housing component and input elements define an elevator car operating panel.

8. The common platform user interface touch system of any of claims 1-6, wherein the first housing component and input elements define an elevator hall call panel.

9. The common platform user interface touch system of any preceding claim, wherein the common platform user interface touch system is a component of an elevator system.

10. The common platform user interface touch system of any preceding claim, further comprising a flexible haptic element disposed within the enclosure and configured to provide physical feedback to a user interacting with the at least one input element, preferably, wherein the flexible haptic element is at least one of wound springs, gels, polymeric foam, or vibration generator.

11. The common platform user interface touch system of any preceding claim, wherein the first housing component and the second housing component are integrally formed.

12. The common platform user interface touch system of any preceding claim, wherein the first and second housing components are removably connectable.

13. The common platform user interface touch system of any preceding claim, wherein the interface controller is configured to detect at least one of (i) an amount of force applied to the pressure sensing element, (ii) a duration or length of time of application of force applied to the pressure sensing element, (iii) multiple separate or distinct locations of input at the pressure sensing element, (iv) different size areas of force applied to the pressure sensing element, or (v) a type of input device applied to the input element.

14. A method of forming a common platform user interface touch system in accordance with any preceding claim comprising:
assembling a first housing component and a second housing component, the first housing component having at least one input element;
installing a pressure sensing element within the enclosure and configured to receive user input from the at least one input element; and
operably connecting an interface controller to the pressure sensing element and configured to receive inputs from the pressure sensing element to detect user input at the at least one input element.
